# EUROPÄISCHE PATENTSCHRIFT

(11) **EP 3 566 018 B1**
(45) Veröffentlichungstag und Bekanntmachung des Hinweises auf die Patenterteilung: **27.07.2022**
(21) Anmeldenummer: 17828709.0
(22) Anmeldetag: 19.12.2017
(51) Int. Cl.: F41H 13/00, F41G 1/35

(54) **LASERSYSTEM MIT SCHUTZEINRICHTUNG**
LASER SYSTEM COMPRISING A PROTECTION DEVICE
SYSTÈME LASER DOTÉ D'UN DISPOSITIF DE PROTECTION

(30) Priorität: 04.01.2017 DE 102017100068
(43) Veröffentlichungstag der Anmeldung: 13.11.2019
(73) Patentinhaber: Rheinmetall Waffe Munition GmbH, 29345 Südheide (DE)
(72) Erfinder: JUNG, Markus, 29358 Eicklingen (DE); RIESBECK, Thomas, 29223 Celle (DE); BAUMGÄRTEL, Thomas, 30177 Hannover (DE)
(74) Vertreter: DREISS Patentanwälte PartG mbB
(86) Internationale Anmeldenummer: PCT/EP2017/083433
(87) Internationale Veröffentlichungsnummer: WO 2018/127397

(56) Entgegenhaltungen:
- WO-A1-2007/039473
- FR-A1- 2 753 898
- FR-A1- 2 993 971
- US-A1- 2016 062 148
- US-B1- 8 051 761

## Beschreibung

Die Erfindung beschäftigt sich mit einer Schutzeinrichtung für ein Lasersystem zur Schaffung eines die Augen schützenden Lasersystems. Das Lasersystem umfasst dabei wenigstens einen Wirklaser mit wenigstens einer Strahlführung. Die Schutzeinrichtung ist für eine Laserwaffe vorgesehen. Der Schutz bzw. eine Augensicherheit möglicherweise gefährdeter Personen wird dabei durch wenigstens eine zusätzliche Sicherheitsvorrichtung geschaffen. Diese Sicherheitsvorrichtung soll zumindest das Schließen des Auges und / oder gegebenenfalls ein Abwenden der Blickrichtung vom Aufpunkt des Wirklaserstrahls auf ein Ziel bewirken bzw. hervorrufen. Die Sicherheitsvorrichtung kann einen weiteren Laser als Warnlaser umfassen, der in einem sichtbaren Spektralbereich arbeitend kurz vor Einsatz des Wirklasers eingesetzt wird.

Lasereffektoren können als sehr präzise Waffen ausgeführt sein, weiche die Wirkung auf einen sehr kleinen Fleck, einen so genannten Aufpunkt, auf dem Zielobjekt konzentrieren können. Des Weiteren kann es um den Aufpunkt, je nach Laserleistung, Material und Oberflächenbeschaffenheit des Zielobjekts, zu gerichteter und diffuser Reflexion der Laserstrahlung kommen. Auch diese Laserstrahlung kann unter Umständen augenschädlich sein.

Die nach internationaler Norm zulässige Laserleistungsdichte für die Bestrahlung (Expositionsgrenzwert EGW) des Auges liegt bei einer verwendeten Wellenlänge von 1,06 µm bei 50 W/m².

Bei einigen für Laserwaffen diskutierten Einsatzszenarien (Bekämpfung Pickup, Speedboot, Jetski etc.) kann nicht ausgeschlossen werden, dass bei Soldaten, Kombattanten und Zivilisten, die sich in der unmittelbaren Nähe des Aufpunktes aufhalten und / oder in Richtung der Reflexion bzw. Streuung des Laserstrahls (Wirklaserstrahl) vom Aufpunkt schauen, der EGW-Wert für das Auge überschritten wird. Der Blick in den direkten Strahl / Laserstrahl bzw. auf den Aufpunkt aus kurzer Entfernung kann zu einer Überschreitung des EGW und damit zu Schäden führen.

Die WO 2007/039473 A1 offenbart ein Lasersystem mit einem Wirklaser mit wenigstens einer Strahlführung und einem Wirkbereich beim Einsatz des Wirklasers um ein Objekt/Ziel. Beschrieben werden ein Verfahren und eine Vorrichtung zum aufeinanderfolgenden und wiederholten Beleuchten einer Anzahl entfernter Gebiete, die gemeinsam ein größeres Gebiet definieren, mit Licht in Form eines Strahls oder von Strahlen, um eine physiologische Blinzelantwort oder einen optischen Blinzelreflex in dem beleuchteten Bereich zu induzieren.

Die FR 2 753 898 A1 erörtert eine Vorrichtung zum Schutz der Augen eines Benutzers vor Lichtstrahlen, die von einer gepulsten Lichtquelle, insbesondere einer Laserquelle, abgegeben werden. Damit solle erreicht werden, dass jedes Mal, wenn ein Lichtstrahl von der Lichtquelle emittiert wird, die Sicht des Benutzers geschlossen wird, so dass die Augen wirksam geschützt werden. Der Verschluss kann eine mechanischer Verschluss sein oder ein opto-elektronischer. Akustooptische Kristalle oder ein keramisches Verschlusselement werden ebenfalls angegeben.

Die FR 2 993 971 A1 definiert eine Beleuchtungsvorrichtung mit einem Emitter elektromagnetischer Strahlung und einem Beobachtungssystem. Ziel ist es, eine Einrichtung zur Beleuchtung einer Szene bereitzustellen, die es ermöglicht, einen Teil der anwesenden Personen zu behindern und andere nicht zu stören.

Mit der Thematik des Augenschutzes beschäftigt sich bereits die DE 693 06 078 T2. Diese beschreibt eine optische Laserzielvorrichtung mit wechselnder Abdunkelung des Laser- und Beobachtungsstahlganges. Ein bewegliches Element dunkelt den Laserstrahl ab, wenn der Zielstrahl nicht durch das bewegliche Element abgedunkelt ist. Dabei werden abwechselnd der Laserstrahl und der Zielstrahl in einer solchen Häufigkeit abgedunkelt, dass die Persistenz des Netzhautbildes des Bedieners erhalten bleibt.

Die DE 601 08 174 T2 (EP 1 391 014B1) schlägt vor, eine Laserwaffe im augensicheren Wellenbereich arbeiten zu lassen.

Eine Einrichtung und ein Verfahren zur Erkennung von Laserstrahlung betrifft die DE 10 2012 221 164 A1. Darin wird die DE 14 97 569 A zitiert, bei der dem Benutzer eines Periskops über eine Warnlampe angezeigt wird, dass das Periskop auf eine Lichtquelle mit augenschädlicher Strahlung ausgerichtet ist. Die Schutzvorrichtung ist gegen Laserstrahlung in optischen Instrumenten anwendbar. Da jedoch nur direkt eintreffende Laserstrahlung nachgewiesen werden kann, schlägt die DE 10 2012 221 164 A1 vor, mit einer Einrichtung eintreffendes Licht aus einem größeren Raumwinkel auf die Anwesenheit von kohärenter, monochromatischer oder polarisierter Laserstrahlung zu überwachen und ein Warnsignal auszugeben.

Wenngleich diese Vorschläge praxistauglich erscheinen, ist eine Verwendung für die vorliegende Problematik des Augenschutzes bei Gewährleistung der Funktionssicherheit als Laserwaffe (bzw. eines Waffenlasers) nicht praktikabel. Die vorgenannten augensicher ausgeführten Laser erfüllen die an einen Waffenlaser gestellten Anforderungen nicht bzw. haben deutliche Nachteile gegenüber beispielsweise einem Yb:YAG - Laser (Waffenlasern) bezüglich verfügbarer Laserleistung, erreichbarer Strahlqualität, Beleuchtungsdauer, Stabilität, Effizienz (elektrisch zu optisch), Verfügbarkeit etc.

Die Erfindung stellt sich die Aufgabe, einen Augenschaden, resultierend durch einen Blick in den direkten Strahl hoher Intensität eines Wirklasers auszuschließen, zumindest jedoch diesem vorzubeugen.

Gelöst wird die Aufgabe durch ein Lasersystem gemäss Anspruch 1 und ein Verfahren gemäss Anspruch 9. Vorteilhafte Ausführungen sind in den Unteransprüchen enthalten.

Der Erfindung liegt die Idee zugrunde, eine Person vor augenschädlicher Lichtstrahlung eines Wirklasers zu schützen und diese Person zu warnen. Neben diesem Warnen soll eine Augensicherheit dadurch geschaffen werden, dass entweder der Augenschlussreflex zum Schließen des Auges angeregt wird, und / oder ein Abwenden der Blicklinie der Person(en) vom Aufpunkt und damit von der Streustrahlung oder der direkten Bestrahlung erfolgt. Vorgesehen ist, eine Schutzvorrichtung gegen auf ein Ziel / Objekt direkt oder indirekt (z.B. diffuse Streustrahlung) auftreffende Laserstrahlen zu schaffen.

Hintergrund der Idee ist, den EGW-Wert für die der Streustrahlung von einem niedrigen Grenzwert des (offenen) Auges auf einen hohen Grenzwert der Haut (geschlossenes Auge) zu verschieben. Bei geschlossenem Auge liegt der EGW-Wert bei 1000 W/m² (für menschliche Haut) und ist damit um einen Faktor 20 größer.

Als Schutzvorrichtung wird zum Wirklaser zusätzlich ein Laser betrieben, der in einem sichtbaren Spektralbereich arbeitet. Dieser Laser wird kurz vor Einsatz des Wirklasers eingesetzt. Durch diesen Einsatz soll ein Schließen der Augen der Person(en) und / oder ein Abwenden der Blickrichtung vom Aufpunkt des Wirklaserstrahls herbei geführt werden.

Alternativ kann durch Wahl der durch diesen Laser zu bestrahlenden Fläche die Sicht zum Aufpunkt unterbrochen bzw. die Sichtlinie zum Aufpunkt genommen werden. Bevorzugt wird ein Laser, der im grünen Spektralbereich arbeitet.

Es besteht aber auch die Möglichkeit, der Person bzw. den Personen die zu erwartende Gefahr durch Aussenden eines roten Laserstrahls anzuzeigen. Dieser kann dann beispielsweise zur Signalgebung für die Personen gepulst werden. Eine derartig gepulste rote Laserstrahlung kann beispielsweise dann verwendet werden, wenn vorrangig nur ein Abwenden herbeigeführt werden soll.

Dieser Laser wird zusätzlich zum Wirklaser eingesetzt und dient vorrangig der Warnung, dass zeitversetzt der Wirklaser zum Einsatz kommen wird. Dabei kann es sich beim warnenden Laser um einen Dazzlinglaser (Dazzler), wie beispielsweise GLOW (Green Laser Optical Warner) handeln. Der Wirklaser kann ein Faserlaser (ca. 1-100 kW/cm²) sein. Alternative andere Laser kennt der Fachmann.

Der zusätzliche Laser bestrahlt bevorzugt mindestens die gleiche Fläche am Ziel, wie der Wirklaser. Je nach Vignette (militärisch: Kleinlage, Einsatzszenario) kann die durch den zusätzlichen Laser bestrahlte Fläche am Objekt / Ziel aber auch deutlich größer als die durch den Wirklaser bestrahlte Fläche sein, um so der Person oder den Personen die Sichtlinie zum Aufpunkt nehmen zu können. Die wenigstens eine Person im Wirkbereich des Wirklasers nimmt diese Bestrahlung wahr. Intuitiv wird diese Bestrahlung als eine Gefahr eingestuft. Die wenigstens eine Person wird aufgrund der Sichtbarkeit des Laserstrahls des zusätzlichen Lasers dem menschlichen Reflex folgen, dem so genannten Lidschlussreflex, und / oder die Blickrichtung von der Strahlrichtung des zusätzlichen Lasers (Dazzinglaser) bzw. von Reflexionen vom bestrahlten Objekt / Ziel abwenden.

Erst nach einer vorbestimmten Zeit, in der Regel nach ca. 250 ms (Lidschiussreflex bzw. Zeit für das Abwenden), wird der eigentliche Wirklaser dann auf das Objekt / Ziel aufgeschaltet.

Durch diese zeitliche Vorwarnung durch den zusätzlichen Laser bzw. die zeitliche Verzögerung des Einsatzes des Wirklasers nach dem Wirksamwerden des zusätzlichen Lasers ist es möglich, eine Schädigung der Personen durch die Strahlung des Wirklasers bzw. deren Streustrahlung vom Aufpunkt zu vermeiden, zumindest jedoch zu minimieren. Eine Schädigung kann dadurch deutlich reduziert werden. Insbesondere im erfolgreichen Fall des Augenschließens ist eine Vermeidung von (dauerhaften) Schäden gegeben, da nun der deutlich höhere EGW-Wert für die Haut (geschlossene Augen) verantwortlich zeichnet.

Durch diese Lösung können Wirklaser in Vignetten eingesetzt und das Risiko für Personen (wie Soldaten, Kombattanten, Zivilisten etc.) deutlich reduziert werden.

Der zusätzliche Laser (Dazzinglaser) kann sowohl achsparallel in der optischen Achse als auch abgesetzt vom Wirklaser eingesetzt werden. Der zusätzliche Laser kann zusätzlich auch als Beleuchtungslaser für den Wirklaser eingesetzt werden.

Mit dem zusätzlichen Laser wird eine Abstufung der Eskalation erreicht, da die Personen vorab optisch gewarnt werden.

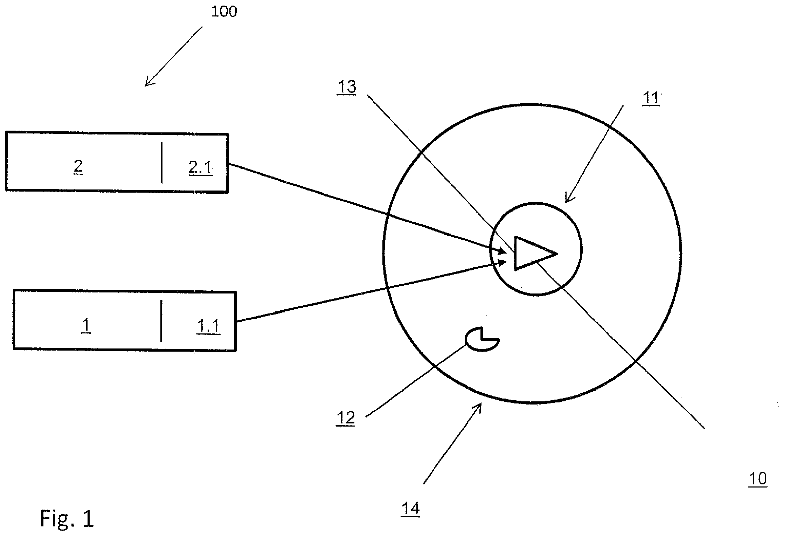

Anhand eines Ausführungsbeispiels mit Zeichnung soll die Erfindung näher erläutert werden. Die Fig. 1 bis 3 zeigen skizzenhaft ein Ziel (Target) 10, das durch wenigstens ein Lasersystem, hier durch einen Wirklaser 1, bekämpft werden soll. Dem Wirklaser 1 ist eine Strahlführung 1.1 zugeordnet. Der Wirklaser 1 ist in diesem Ausführungsbeispiel eine Laserwaffe zur Bekämpfung des Ziels 10.

Mit 14 ist ein Wirkbereich gekennzeichnet, der beim Einsatz des Wirklasers 1 um das Ziel 10 entsteht. Wie den Fig. entnehmbar ist, befindet sich zumindest ein gefährdetes Objekt 12, hier wenigstens eine Person 12 im Wirkbereich 14 des Wirklasers 1 bzw. im Wirkbereich 14 dieser Laserstrahlung.

Um zu vermeiden, dass bei der Person 12 durch die Laserstrahlung des Wirklasers 1 Augenverletzungen etc. hervorgerufen werden könnten, ist eine Schutzvorrichtung 100 vorgesehen. Diese Schutzvorrichtung 100 hat die Aufgabe, der Person 12 eine gefährliche Situation zu signalisieren. In der bevorzugten Ausführung soll dieses Signal dazu führen, dass die Person 12 die Augen automatisch (menschliche Reaktion z.B. auf Helligkeit) schließt.

Als Schutzvorrichtung 100 wird in der bevorzugten Ausführung ein zusätzlicher Laser 2 mit einer Strahlführung 2.1 vorgesehen. Dieser Laser 2 wird vorrangig als Warnlaser betrieben.

Dieser zusätzliche Laser 2 kann gemäß der Fig. 1 abgesetzt vom Wirklaser 1 arbeiten. Der Wirklaser 1 und der zusätzliche Laser 2 sind zueinander und zum Ziel 10 beabstandet.

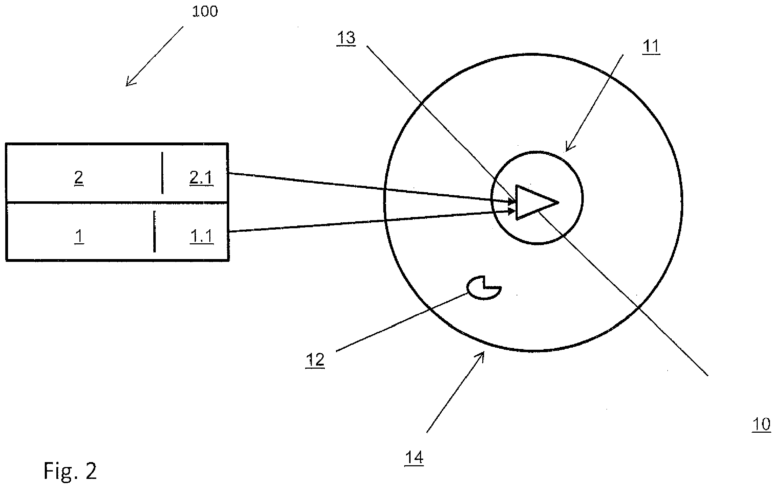

Gemäß Fig. 2 sind der Wirklaser 1 und der zusätzliche Laser 2 achsparallel zueinander ausgerichtet. Beide befinden sich bevorzugt in unmittelbarer Nähe zueinander.

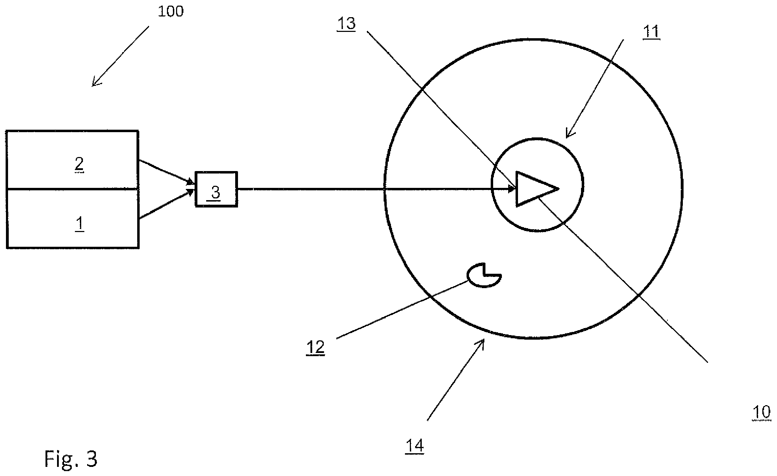

Im Ausführungsbeispiel nach Fig. 3 verwenden der Wirklaser 1 und der Warnlaser 2 dieselbe Strahlführung 3. Die eigene Strahlführung 1.1 bzw. 2.1 kann entfallen, da der zusätzliche Laser 2 und der Wirklaser 1 nicht zeitgleich sondern nacheinander betrieben werden. Eine Umschaltung auf die Strahlführung 3 kann vorgesehen sein.

Beim Wirklaser 1 kann es sich um einen Faserlaser (z.B. Yb:YAG - Laser) handeln. Der zusätzliche Laser 2 kann ein Dazzlinglaser sein. Dieser Dazzlinglaser kann im grünen Spektralbereich arbeiten. Während der Wirklaser 1 bevorzugt im Bereich von 1-100 kW/cm² arbeitet, liegt die Leistung eines Dazzinglasers bevorzugt bei 1-100 mW/cm².

Die Funktionsweise ist wie folgt:
Vorab sollte der Wirkbereich 14 des Wirklaser 1 ermittelt werden, der je nach Aufbau des Wirklasers 1 verschieden sein kann, wenn dieser nicht bekannt ist.

Zumindest dieser Wirkbereich 14 des Wirklasers 1 wird dann auf Personen 12 hin überwacht. Die Überwachung kann visuell oder mittels Sensoren (nicht näher dargestellt) durchgeführt werden. Wird wenigstens eine Person 12 innerhalb dieses Wirkbereichs 14 des Wirklasers 1 detektiert, visuell oder mittels der Sensoren, erfolgt vor einer möglichen Betätigung des Wirklasers 1 ein Zuschalten des zusätzlichen Lasers 2. Dieses Zuschalten kann manuell vorgenommen werden. Auch eine automatische Zuschaltung, beispielsweise aufgrund der in einer Steuereinheit (nicht näher dargestellt) verarbeiteten Sensordaten, ist möglich.

Durch Aussenden eines sichtbaren Lichtstrahls durch den zusätzlichen Laser 2 wird die wenigstens eine Person 12 darauf hingewiesen, dass diese sich in einem gefährdeten Bereich befindet. Der sichtbare Lichtstrahl wird in diesem Fall als Warnsignals ausgesandt. Das Warnsignal kann ein grüner, roter oder ein anders farbiger Lichtstrahl sein.

Mit dieser Information wird die Person 12 vor einer Gefahr gewarnt. Dadurch kann erreicht werden, dass die wenigstens eine Person 12 zumindest zum Schließen des Auges und / oder ein Abwenden der Blicklinie der Person(en) vom Aufpunkt 13 und damit von der Streustrahlung oder der direkten Bestrahlung des nachfolgend zugeschalteten Wirklasers 1 angeregt wird. Erst nach einer vorbestimmten Zeit, also nach dem Zuschalten des zusätzlichen Lasers 2, in der Regel nach ca. 250 ms, wird der eigentliche Wirklaser 1 dann auf das Objekt / Ziel 10 aufgeschaltet. Dieses Aufschalten kann bevorzugt durch die Steuereinheit initiiert werden.

Der zusätzliche Laser 2 kann zusätzlich oder alternativ als Beleuchtungslaser des Wirklasers 2 seinen Einsatz finden.

## Patentansprüche

1. Lasersystem umfassend eine Laserwaffe mit einem Wirklaser (1) mit wenigstens einer Strahlführung (1.1, 3) und einem Wirkbereich (14) beim Einsatz des Wirklasers (1) um ein Objekt / Ziel (10), **gekennzeichnet durch** eine Schutzvorrichtung (100) mit wenigstens einem zusätzlichen Laser (2), der in einem sichtbaren Spektralbereich arbeitet, wobei die Schutzvorrichtung (100) derart konfiguriert ist, dass der zusätzliche Laser (2) zugeschaltet wird, wenn wenigstens eine Person (12) im Wirkbereich (14) des Wirklasers (1) vor dem Einsatz des Wirklasers (1) ermittelt wurde.

2. Lasersystem nach Anspruch 1, **dadurch gekennzeichnet, dass** der Wirklaser (1) und der zusätzliche Laser (2) getrennt voneinander angebracht sind.

3. Lasersystem nach Anspruch 1, **dadurch gekennzeichnet, dass** Wirklaser (1) und zusätzliche Laser (2) zueinander achsparallel ausgerichtet sind.

4. Lasersystem nach einem der Ansprüche 1 bis 3, **dadurch gekennzeichnet, dass** der Wirklaser (1) und der zusätzliche Laser (2) auf eine gemeinsame Strahlführung (3) zugreifen.

5. Lasersystem nach einem der Ansprüche 1 bis 4, **dadurch gekennzeichnet, dass** der Wirklaser (1) ein Faserlaser ist.

6. Lasersystem nach einem der Ansprüche 1 bis 5, **dadurch gekennzeichnet, dass** der zusätzliche Laser (1) ein Dazzlinglaser ist.

7. Lasersystem nach Anspruch 6, **dadurch gekennzeichnet, dass** der Dazzlinglaser im grünen Spektralbereich arbeitet.

8. Lasersystem nach einem der Ansprüche 1 bis 7, **dadurch gekennzeichnet, dass** die Sicherheitsvorrichtung (100) auch als Beleuchtungslaser fungieren kann.

9. Verfahren zum Schutz vor Laserstrahlung mit einem Lasersystem nach Anspruch 1, **gekennzeichnet durch** die folgenden Schritte:
• Bestimmen des Wirkbereiches (14) um das Objekt / Ziel (10),
• Überwachen zumindest des Wirkbereiches (14) auf Personen (12),
• Aussenden eines sichtbaren Lichtstrahls durch den zusätzlichen Laser (2) nach Detektion mindestens einer Person (12),
• Aufschalten des Wirklasers (1) auf das Objekt / Ziel (10).

10. Verfahren nach Anspruch 9, **dadurch gekennzeichnet, dass** das Aufschalten des Wirklasers (1) zeitversetzt zum Zuschalten des zusätzlichen Lasers (2) erfolgt.

11. Verfahren nach Anspruch 9 oder 10, **dadurch gekennzeichnet, dass** der zusätzliche Laser (2) mindestens die gleiche Fläche am Objekt / Ziel (10) wie der Wirklaser (1) bestrahlt, wobei die durch den zusätzlichen Laser (2) bestrahlte Fläche am Objekt / Ziel (10) auch größer als die durch den Wirklaser (1) bestrahlte Fläche sein kann.

## Claims

1. Laser system comprising a laser weapon having an effective laser (1) with at least one beam guide (1.1, 3) and an effective range (14) around an object/target (10) when the effective laser (1) is used, **characterized by** a protective device (100) having at least one additional laser (2) that operates in a visible spectral range, the protective device (100) being configured in such a way that the additional laser (2) is switched on when at least one person (12) has been detected in the effective range (14) of the effective laser (1) before the effective laser (1) is used.

2. Laser system according to claim 1, **characterized in that** the active laser (1) and the additional laser (2) are mounted separately from one another.

3. Laser system according to claim 1, **characterized in that** the active laser (1) and the additional laser (2) are aligned axially parallel to one another.

4. Laser system according to any of claims 1 to 3, **characterized in that** the active laser (1) and the additional laser (2) access a common beam guide (3).

5. Laser system according to any of claims 1 to 4, **characterized in that** the active laser (1) is a fiber laser.

6. Laser system according to any of claims 1 to 5, **characterized in that** the additional laser (1) is a dazzling laser.

7. Laser system according to claim 6, **characterized in that** the dazzling laser operates in the green spectral range.

8. Laser system according to any of claims 1 to 7, **characterized in that** the safety device (100) can also function as an illuminating laser.

9. Method for protection against laser radiation with a laser system according to claim 1, **characterized by** the following steps:
• determining the effective range (14) around the object/target (10),
• monitoring at least the effective area (14) for people (12),
• emitting a visible light beam by the additional laser (2) after detection of at least one person (12),
• activating the effective laser (1) onto the object/target (10).

10. Method according to claim 9, **characterized in that** the active laser (1) is activated with a time offset in relation to switching on the additional laser (2).

11. Method according to either claim 9 or claim 10, **characterized in that** the additional laser (2) irradiates at least the same area on the object/target (10) as the active laser (1), it also being possible for the area on the object/target (10) irradiated by the additional laser (2) to be greater than the area irradiated by the active laser (1).

## Revendications

1. Système laser comprenant une arme laser ayant un laser actif (1) avec au moins un guide de faisceau (1.1, 3) et une zone efficace (14) lors de l'utilisation du laser actif (1) autour d'un objet / cible (10), **caractérisé par** un dispositif de protection (100) comprenant au moins un laser supplémentaire (2) qui travaille dans un domaine spectral visible, dans lequel ledit dispositif de protection (100) est configuré de telle manière que le laser supplémentaire (2) est activé lorsqu'au moins une personne (12) a été identifiée dans la zone efficace (14) du laser actif (1) avant l'utilisation du laser actif (1).

2. Système laser selon la revendication 1, **caractérisé par le fait que** le laser actif (1) et le laser supplémentaire (2) sont montés séparément l'un de l'autre.

3. Système laser selon la revendication 1, **caractérisé par le fait que** le laser actif (1) et le laser supplémentaire (2) sont orientés parallèlement à l'axe l'un par rapport à l'autre.

4. Système laser selon l'une quelconque des revendications 1 à 3, **caractérisé par le fait que** le laser actif (1) et le laser supplémentaire (2) accèdent à un guide de faisceau (3) commun.

5. Système laser selon l'une quelconque des revendications 1 à 4, **caractérisé par le fait que** le laser actif (1) est un laser à fibre.

6. Système laser selon l'une quelconque des revendications 1 à 5, **caractérisé par le fait que** le laser supplémentaire (2) est un laser éblouissant.

7. Système laser selon la revendication 6, **caractérisé par le fait que** le laser éblouissant travaille dans le domaine spectral vert.

8. Système laser selon l'une quelconque des revendications 1 à 7, **caractérisé par le fait que** le dispositif de sécurité (100) peut faire fonction également de laser d'illumination.

9. Procédé de protection contre le rayonnement laser, comprenant un système laser selon la revendication 1, **caractérisé par** les étapes suivantes consistant à:
• déterminer la zone efficace (14) autour de l'objet / du cible (10)
• surveiller au moins la zone efficace (14) quant à des personnes (12),
• émettre un faisceau lumineux visible par le laser supplémentaire (2) après avoir détecté au moins une personne (12),
• appliquer le laser actif (1) à l'objet / au cible (10) .

10. Procédé selon la revendication 9, **caractérisé par le fait que** l'application du laser actif (1) s'effectue à décalage temporel par rapport à l'activation du laser supplémentaire (2).

11. Procédé selon la revendication 9 ou 10, **caractérisé par le fait que** le laser supplémentaire (2) irradie au moins la même surface sur l'objet / le cible (10) que le laser actif (1), dans lequel la surface sur l'objet / le cible (10), qui est irradiée par le laser supplémentaire (2) peut également être plus grande que la surface qui est irradiée par le laser actif (1).
